# EUROPEAN PATENT APPLICATION

(11) **EP 2 983 183 A1**
(43) Date of publication of application: **10.02.2016**
(21) Application number: 14180236.3
(22) Date of filing: 07.08.2014
(51) Int. Cl.: H01G 4/30, H01G 4/232

(54) **Film capacitor for high ambient pressure**

(71) Applicant: Siemens Aktiengesellschaft, 80333 München (DE)
(72) Inventor: Aarskog, Fredrik Gundersen, 7031 Trondheim (NO); Kristensen, Knut Schonhowd, 7012 Trondheim (NO)

(57) **Abstract**

The invention relates to a film capacitor (100) comprising a layered structure (110) including a plurality of metal film layers (111) and a plurality of dielectric film layers (112) and contact layers (120,140) provided on opposite side surfaces of the layered structure (110). Each contact layer comprises different contact sections (121-125). Each contact section of the contact layer is separated from another neighbouring contact section of the contact layer by a cutout area (130) in which no contact layer is provided.

## Description

The present invention relates to a film capacitor, to a subsea variable speed drive comprising the film capacitor and to a method for producing a film capacitor.

### Background

In deep sea oil or gas production sites, subsea power grids are installed for providing the required electrical power for electrical actuators like electric motors and electric pumps. For controlling an electric motor, voltage, current and AC frequency may be varied. To this end, a variable speed drive (VSD) may be provided in the power grid. These variable speed drives contain inter alia DC link capacitors.

All components including the capacitor inside the subsea VSD enclosure will be located in a pressure compensated fluid volume, e.g. a dielectric fluid such as Midel 7131. This means that all the electrical components will be in contact with the dielectric fluid and will be exposed to the same ambient pressure as the water pressure surrounding the variable speed drive. The current design depth of the subsea variable speed drive is 1 to 3000 meters, which gives a surrounding seawater pressure of approximately 1 to 300 bar resulting in a fluid pressure inside the variable speed drive of approximately 1 to 300 bar. Applications at even higher water depths up to 5000 meters are foreseeable.

Since the DC link capacitor will be exposed to the ambient pressure at the seabed, it must be designed to withstand the mechanical stress that is caused by this pressure. The capacitors used for frequency conversion are often implemented as film capacitors, e.g. metalized film capacitors. The film material normally used in such a film capacitor may be polypropylene, but is not limited to this material wherein the thickness can vary between 1 µm and several hundreds of µm. Before the films are wound in many turns, the films, plastic films, are metalized with a thin layer of aluminium or zinc or other metals in order to provide the metal layer between the dielectric layers. Different methods for winding a metalized film capacitor are known. One possibility to generate such a metalized film capacitor is the stacked winding method, in which one or more films are wound in many turns around a polygon shaped core. The flat sections of the winding are cut out and are used as capacitors while the corner/bent sections are discarded. Another method is a flat winding, in which one or more films are wound in many turns around the core which is often cylindrical. When the winding is completed, the core is removed and the winding is stamped to a flat shape using a strong force.

After winding is completed, the winding is put onto a machine where a metal spray (metal vapour) is applied to both side surfaces of the winding to form contact layers which build electrical terminals. As metals, zinc, aluminium, or zinc and aluminium mixtures may be used, however, also other metals may be used. Furthermore, an additional outer layer of tin spray may be applied to improve the solderability of wires/contact elements to the contact layers.

The application of the contact layer is a very slow process, since the vaporization energy of the contact layer is transferred to the capacitor winding. Due to the relatively low melting temperature of the film, 110°C to 200°C for polypropylene films, the contact layer should be deposited in very thin sublayers and the winding should be sufficiently cooled between each applied sublayer of the contact layer. When the capacitor is exposed to a high ambient pressure, it was discovered that due to the high differences in the material properties of the film and the contact layer, a high mechanical stress arises. This mechanical stress leads to a deformation of the capacitor, which can lead to electrical failures and will reduce the lifetime of the capacitor.

Accordingly, a need exists to minimize electrical failures and to increase the lifetime of capacitors in high ambient pressure applications.

This need is met by the features of the independent claims. Further embodiments are described in the dependent claims.

According to a first aspect a film capacitor is provided comprising a layered structure including a plurality of metal film layers and a plurality of dielectric film layers. The film capacitor furthermore comprises contact layers provided on opposite side surfaces of the layered structure wherein each contact layer comprises different contact sections wherein each contact section of the contact layer is separated from another neighbouring contact section of the contact layer by a cutout area in which no contact layer is provided.

This presence of the different sections of the contact layer separated by cutout areas will reduce the mechanical stress in both the contact layer and the layered structure. It was found that the mechanical stress in the dielectric film layers could be significantly reduced when the cutout areas are provided. Furthermore, the mechanical stress in the contact layer can be significantly reduced.

Preferably, each cutout area which separates one section of the contact layer from another section of the contact layer extends substantially perpendicular to the metal film layers and the dielectric layers over all layers of the layered structure. This means that the cutout areas extend over the complete height of the capacitor. When the cutout areas extend over the whole height of the capacitor, the mechanical stress generated by the contact in the different materials having different material properties can be relieved over the complete height of the capacitor so that failures of the capacitor can be avoided in all layers.

Each cutout area may be rectangular in shape and extends in a direction perpendicular to the layer over the complete height of the layered structure. The rectangular shape may be a slit-like shape meaning that the width of the cutout areas in direction of the layers of the layered structure is much smaller than the width of the different sections in direction of the layers of the layered structure. In other words, the width of the different sections in direction of the layers is much larger, e.g. more than five or ten times larger than the width of the cutout areas in direction of the layers of the layered structure.

The film capacitor may furthermore comprise a contact element connected to the contact layer provided on each side surface. The contact element may be designed in such a way that it comprises a connecting portion to each of the contact sections as each contact section is separated from the other contact sections.

Furthermore, a method for producing a film capacitor is provided in which a layered structure including a plurality of metal film layers and a plurality of dielectric film layers is produced. Furthermore, a contact layer is applied to opposite side surfaces of the layered structure wherein each contact layer is applied to one of the side surfaces in such a way that different sections of the corresponding contact layer are generated. Each section of the corresponding contact layer is separated from another neighbouring section of the same contact layer by a cutout area in which no contact layer is provided.

One possibility to generate the contact layer is by applying the contact layer to the corresponding side surface and by interrupting the application of the contact layer at areas of the corresponding side surface where the cutouts are located. By way of example, in this embodiment the metal spray application process in which the contact layer is applied may be interrupted where the cutout area is located and the spray will not be applied and a natural gap in the metal spray area is formed building the cutout area.

In another embodiment a mask is positioned at areas of the corresponding side surface where the cutout areas should be located. The contact layer is then applied to the complete corresponding side surface wherein the cutout areas are shielded by the mask so that no contact layer is provided on the cutout areas and the mask is removed from the corresponding side surface resulting in the separate contact sections separated by the different cutout areas. In still another embodiment each section of the contact layer provided on one of the side surfaces may be generated by applying the contact layer to the complete corresponding side surface and by removing the contact layer in areas of the corresponding side surface where the cutout areas are located. The removing of the contact layer may be obtained by using a saw or milling machine or any other procedure.

The invention furthermore provides a subsea variable speed drive comprising the above discussed film capacitor.

These and other objects, features and advantages of the invention will be apparent when considered in conjunction with the accompanying drawings wherein like reference numerals indicate like structure throughout the figures.

### Brief description of the drawings

Fig. 1 is a schematic perspective view of a film capacitor with contact layers on the side surfaces provided in different sections.
Fig. 2 is a side view of the capacitor of Fig. 1 with a contact element being attached to the different contact sections.
Fig. 3 shows a flowchart including the main steps carried out for the generation of a capacitor as shown in Figs. 1 and 2.

### Detailed description

In the following a film capacitor will be described in which the contact layer, also called schoopage or metal spray layer, is divided into several sections, separated by cutout areas. These cutout areas will reduce the mechanical stress in both the dielectric film and the contact layers.

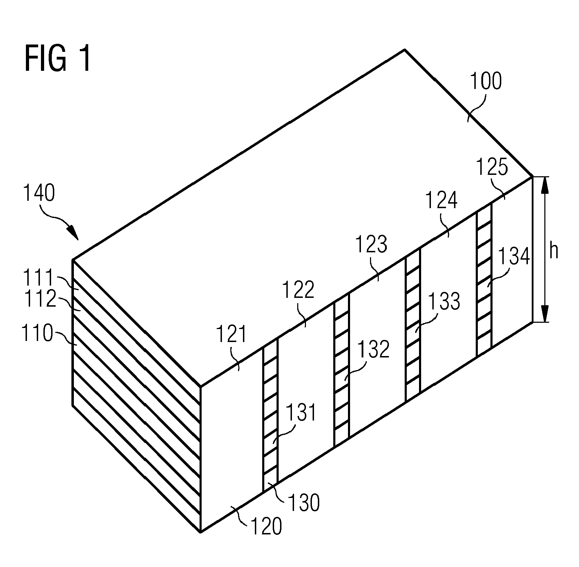

Fig. 1 shows a film capacitor 100 with a layered structure 110 including metal film layers 111 and dielectric film layers 112. In the embodiment shown in Fig. 1, the different film layers are shown as layers with the same width. However, it should be understood that the film capacitor 100 shown in Fig. 1 may use a plastic film as dielectric film layer 112 wherein a thin metal film layer is generated on the plastic layer using e.g. a suitable evaporation system under high vacuum conditions so that the dielectric film layer 112 or plastic layer is metalized with a metal film layer 111 such as aluminium or zinc.

The electrodes are provided by contact layers 120 and 140 provided on opposite side surfaces of the capacitor. As shown in Fig. 1, the contact layer 120 is separated into different contact sections 121, 122, 123, 124 and 125. Each contact section 121-125 is separated from a neighbouring contact section by a cutout area 130, here, the different cutout areas 131-134. As can be deduced from the figure, the cutout areas 131-134 extend over the complete height h of the layered structure. In the cutout areas the mechanical stress generated by the different material properties of the dielectric film layer and the contact layer 120 can be relieved so that the overall mechanical stress of the capacitor under high ambient pressure conditions is minimized.

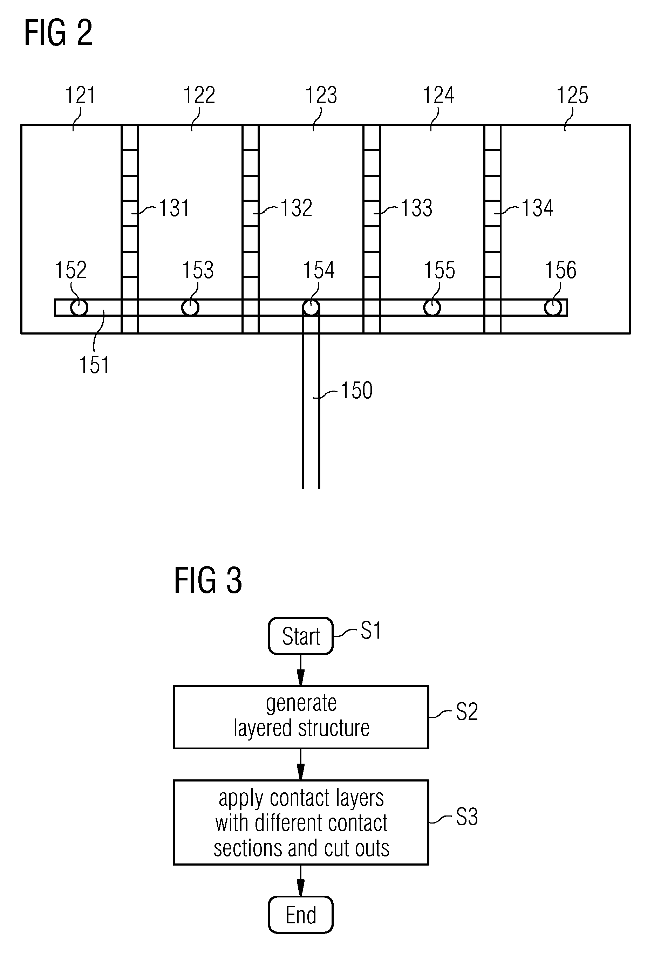

In Fig. 2 a side view of the contact layer surface is shown. As the different contact sections 121-125 are separated by the cutout areas 131-134, a contact element 150 may be provided wherein the contact element comprises a connecting portion 151 which connects the contact element to all contact sections 121-125. The contact of the contact element 150 to each of the contact sections is symbolized by the contact surfaces 152-156 symbolized by the different circles shown in Fig. 2.

Fig. 3 summarizes the generation of a capacitor as shown in Figs. 1 and 2. The method starts in step S1, and in step S2 the layered structure 110 is generated as shown in Fig. 1. Step S2 is known in the art so that a detailed explanation for the generation of the layered structure is omitted. In step S3 the contact layer is applied with the different contact sections and the cutout areas. The cutout areas in the contact layers may be generated in different ways. A first possibility is an interruption of the metal spray application, which provides the contact layer where the cutout area is located and the spray will not be applied and a natural gap in the middle spray area will be formed so that the cutout area is generated. In this method each contact section is generated independent from the other contact sections. Another possibility is by masking the area where the cutout area is located such that the area is shielded and the metal spray will not arrive at the cutout area. This provides a natural gap in the spray areas where the mask is provided. A third possibility is the application of a metal spray to the complete side surface wherein afterwards the desired cutout areas are cut in the metal spray area by using a saw or milling machine.

Summarizing, the invention leads to a lower mechanical stress in the capacitor meaning that it can tolerate a higher ambient pressure without failing. As the mechanical stress is reduced, the lifetime of the capacitor will be furthermore improved.

## Claims

1. A film capacitor (100) comprising:
- a layered structure (110) including a plurality of metal film layers (111) and a plurality of dielectric film layers (112),
- contact layers (120,140) provided on opposite side surfaces of the layered structure (110), wherein each contact layer comprises different contact sections (121-125), wherein each contact section of the contact layer is separated from another neighbouring contact section of the contact layer by a cutout area (130) in which no contact layer is provided.

2. The film capacitor (100) according to claim 1, wherein each cutout area (130) separating one section of contact layer (120,140) from another section of the contact layer extends substantially perpendicular to the metal film layers (111) and the dielectric layers (112) over all layers of the layered structure (110).

3. The film capacitor (100) according to claim 1 or 2, wherein each cutout area (130) is substantially rectangular in shape and extends in a direction perpendicular to the layers of the layered structure (110) over a complete height of the layered structure.

4. The film capacitor (100) according to any of the preceding claims, wherein a width of the cutout areas (130) in direction of the layers of the layered structure (110) is smaller than a width of the different contact sections (121-125) in direction of the layers of the layered structure (110).

5. The film capacitor (100) according to any of the preceding claims, where a width of the different contact sections (121-125) in direction of the layers of the layered structure is at least 5 times larger than a width of the cutout areas in direction of the layers of the layered structure.

6. The film capacitor (100) according to any of the preceding claims, further comprising a contact element (150) connected to the contact layer provided on each side surface wherein the contact element (150) comprises a connecting portion (151) to each of the contact sections.

7. A method for producing a film capacitor comprising the steps of:
- producing a layered structure (110) including a plurality of metal film layers (111) and a plurality of dielectric film layers (112),
- applying a contact layer (120,140) to opposite side surfaces of the layered structure (110) wherein each contact layer is applied to one of the side surfaces in such a way that different contact sections (121-125) of the corresponding contact layer are generated, wherein each contact section of the corresponding contact layer is separated from another neighbouring contact section of the same contact layer by a cutout area (130) in which no contact layer is provided.

8. The method according to claim 7, wherein each contact section (121-125) of the contact layer provided on one of the side surfaces is generated by applying the contact layer to the corresponding side surface and by interrupting the application of the contact layer at areas of the corresponding side surfaces where the cutouts are located.

9. The method according to claim 7, wherein each contact section (121-125) of the contact layer provided on one of the side surfaces is generated by
- positioning a mask at areas of the corresponding side surfaces where the cutout areas (130) should be located,
- applying the contact layer to the complete corresponding side surface, wherein the cutout areas are shielded by the mask so that no contact layer is provided on the cutout areas, and
- removing the mask from the corresponding side surface.

10. The method according to claim 7, wherein each contact section (121-125) of the contact layer provided on one of the side surfaces is generated by applying the contact layer to the complete corresponding side surface and by removing the contact layer at areas of the corresponding side surfaces where the cutout areas should be located,

11. The method according to claim 10, wherein the contact layer at the cutout areas is removed using a sawing or milling procedure.

12. A subsea variable speed drive comprising at least one film capacitor as claimed in any of claims 1 to 6.
